# EUROPEAN PATENT APPLICATION

(11) **EP 2 859 991 A2**
(43) Date of publication of application: **15.04.2015**
(21) Application number: 14161048.5
(22) Date of filing: 21.03.2014
(51) Int. Cl.: B24B 9/00, B24B 27/00

(54) **Deburring machine**

(30) Priority: 08.10.2013 ES 201331474
(71) Applicant: Agfra, S.L., 46460 Silla (Valencia) (ES)
(72) Inventor: Aguilar Salmerón José Vicente, 46460 Silla (Valencia) (ES); Cerezo Calvo, Isaac, 46460 Silla (Valencia) (ES)
(74) Representative: Ungria López, Javier

(57) **Abstract**

Deburring machine composed of a conveyor line along which a mobile carriage (2) moves, which incorporates fixing brackets (3) wherein the parts (4) to be deburred are attached, and of rotating discs (5, 6), which incorporate deburring heads (7), characterized in that it comprises at least a first disc (5) that rotates around a first shaft, and at least a second disc (6) that rotates around a second shaft, the first shaft being perpendicular to the second shaft, the first and second discs (5, 6) rotating in both directions alternatively and being capable of perpendicularly approaching the part to be deburred (4).

## Description

### OBJECT OF THE INVENTION

The present invention relates to a machine used to deburr parts, in general parts of any geometry and material, but especially metal tubes, and in particular tubes with neither a uniform shape nor a revolution shape.

The invention is especially applicable to the field of the parts forming industry.

### TECHNICAL PROBLEM TO BE SOLVED AND BACKGROUND OF THE INVENTION

One of the main stages of the parts mechanization process that where the final finish is given to the part. This stage consists of the final finish of the mechanization process, which normally consists of the homogenization of surfaces and edges by means of the elimination of burrs or the rounding of borders. This is carried out by means of deburring machines or simply with deburring tools, which may be manual or automatic.

Deburring tools are usually used for handcrafted works or short production series and suppose a risk in terms of the final finish of the production, which may not be uniform, as well as problems in terms of the possibility of breakages or imperfections due to human errors.

Among the important risks of manual deburring, the danger of handling abrasive tools for the safety of the operator, the ergonomic risks derived from a repetitive task with unhealthy postures for the operator, and productivity losses due to excesses in the process' cycle time are to be highlighted.

Deburring tools are already incorporated to automatized machines, and the process is much more stable in these machines. A part that is anchored by means of attachments to a mobile carriage that moves along the different phases making up the process is usually introduced, while the tools incorporated to the machine proceed to carry out the same finish for all of the parts.

Within deburring machines, a distinction is usually made between machines for flat surfaces and machines for curved surfaces. The first ones follow a very different process to the others, practically carrying out the removal of burrs by means of the beveling of the edge and not only removing the burrs, but also providing it with a blunt finish.

Deburring machines for curved surfaces are segmented according to the type of surface to be deburred. Therefore, there are machines to deburr the interior of parts, machines for the exterior of parts, machines for parts with large diameters or with small diameters. An added complication is the surfaces which edges are not uniform. In these cases, the finish depends to an important extent on factors such as the size of the tool or the force of application, which means that a homogenous result for the entire contour may not take place.

Current deburring machines have heads, which may be fixed or orbital.

In the case of fixed heads, the parts are attacked by the deburring heads, which create a bevel in the border of the surface to be deburred.

In the case of orbital heads, the parts are attacked by the deburring heads from a certain angle, thereby providing them with a higher quality finish by rounding the edge.

Still, with the range of machinery present in the state of the art, certain geometries of parts and cuts are left without the possibility of being finished with the expected finish. The final finish has ample room for improvement and may even affect the result of the whole set or cause injuries to the final user due to cuts produced by the burrs. The parts are subjected to several deburring lines or even to a manual finish to avoid the foregoing.

A recurrent problem in this procedure is that the deburring heads fail to remove the burr and only knock it over, leaving the burr joined to the part without being removed.

The present invention allows an evident improvement, mainly in the finish of parts with geometries that are not geometries of revolution, based on two contributions. The first one is the incorporation of two groups of deburring heads located in two perpendicular directions. Normally one of them is horizontal and the other is vertical. The other one is that all heads can rotate in alternative directions. Therefore, as heads are made up of an abrasive material and attack the part from every direction, we obtain an improved finish with respect to the traditional finish and we are able to eliminate the problems described above.

### DESCRIPTION OF THE INVENTION

The present invention describes a deburring machine composed of a conveyor line and of rotating discs.

A mobile carriage moves along the conveyor line, incorporating fixing brackets wherein the parts to be deburred are attached. The rotating discs incorporate deburring heads.

The machine comprises at least a first disc that rotates around a first shaft and at least a second disc that rotates around a second shaft, which is perpendicular to the first.

The first discs and the second discs can rotate in both directions alternatively and are capable of approaching the part to be deburred. As a particular case, this movement of approach is perpendicular to the movement of the mobile carriage.

In addition, the second discs are capable of moving vertically.

### BRIEF DESCRIPTION OF THE FIGURES

In order to complete the invention being described, and with the purpose of aiding a better comprehension of the features of the invention according to a preferred embodiment thereof, a set of drawings which represent the following figures in an illustrative rather than limitative manner is attached:

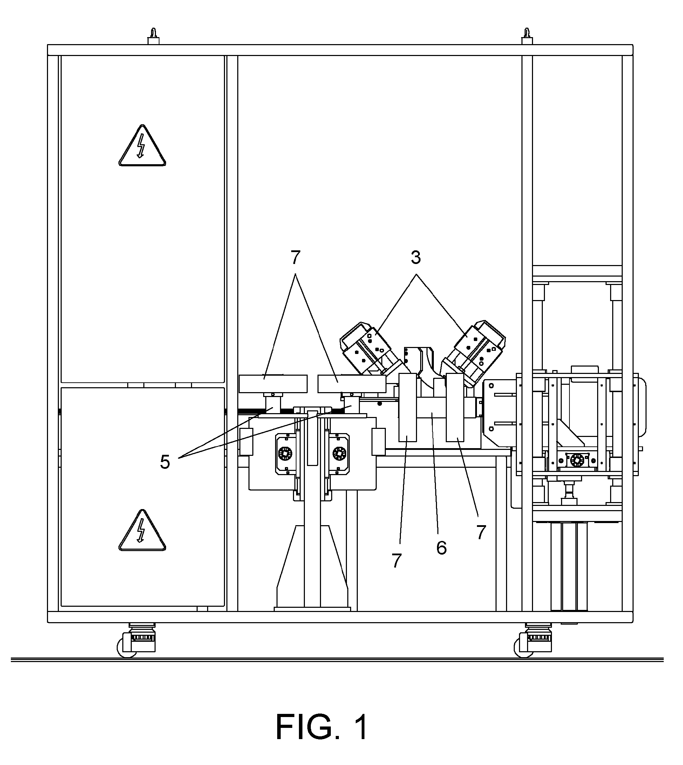

- Figure 1 represents a lateral view of the deburring machine.

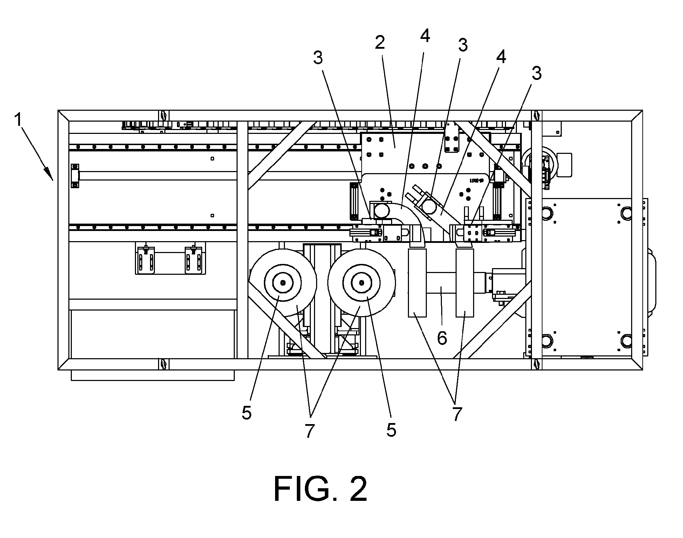

- Figure 2 represents a plant view of the deburring machine.

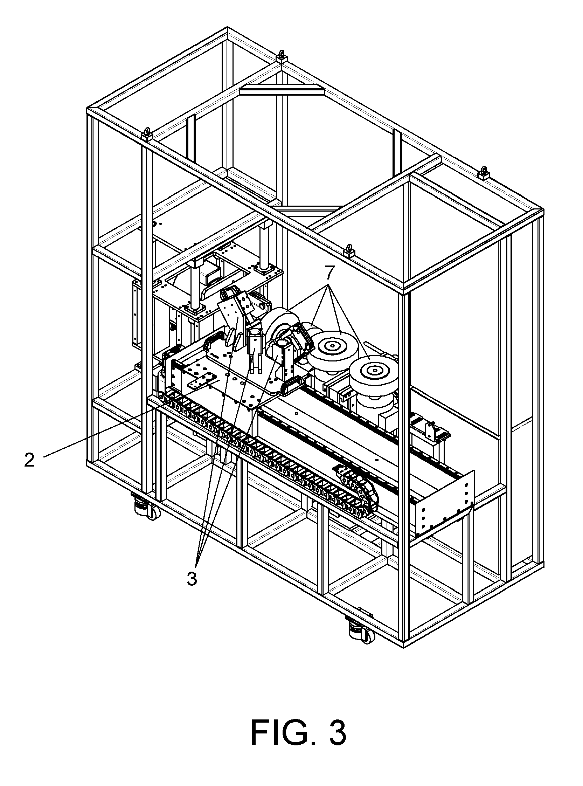

- Figure 3 represents a perspective view of the deburring machine.

The following is a list of the references used in the figures:
1. Part loading area.
2. Mobile carriage for supporting the parts.
3. Anchors for the parts.
4. Parts.
5. First discs.
6. Second discs.
7. Abrasive head.

### DESCRIPTION OF A PREFERRED EMBODIMENT OF THE INVENTION

The present invention relates to a machine for deburring parts in its broadest sense, mainly being focused on tubes that do not have a section of revolution but that have been subsequently formed and follow a random geometry.

As shown in the figures, the machine is composed of a mobile carriage (2) that moves from a loading area (1) wherein the parts (4) to be deburred are attached to the carriage by means of anchors (3). The mobile carriage (2), in its movement along the length of the conveyor line, initially passes through first discs (5), and subsequently through second discs (6), said discs (5, 6) having abrasive heads (7) incorporated that carry out the deburring.

The mobile carriage (2) is programmed to position the parts (4) in front of the heads (7) while they attack the parts (4) by rotating in both directions alternatively. The discs (5, 6) wherein the deburring heads (7) are located have the possibility of moving in the direction of approach to the parts (4), in such a way that the pressure of contact of the heads (7) with the parts (4) may be controlled. In addition, the second discs (6) have the possibility of moving in the vertical direction, which, joined to the movement of approach to the part (4) and the alternative rotation direction of the deburring heads (7), allows attacking the part (4) in every direction, providing a full finish thereto.

The present invention should not be limited to the embodiment described herein. Experts in the art may carry out other configurations based on the present description.

In fact, the preferred embodiment represents a deburring machine that includes two pair of discs (5, 6) with the purpose of representing a working line with two-part (4) batches simultaneously. The machine may have any number of discs (5, 6) in each direction, beginning with a single one, or the mobile carriage may even include as many parts (4) as deemed appropriate.

In consequence, the scope of the invention is defined by the following claims:

## Claims

1. Deburring machine composed of a conveyor line along which a mobile carriage (2) moves, which incorporates fixing brackets (3) wherein the parts (4) to be deburred are attached, and of rotating discs (5, 6), which incorporate deburring heads (7), **characterized in that** it comprises:
- at least a first disc (5) that rotates around a first shaft, and
- at least a second disc (6) that rotates around a second shaft, where the first shaft is perpendicular to the second shaft.

2. Deburring machine according to claim 1, **characterized in that** the first discs (5) and the second discs (6) rotate in both directions alternatively.

3. Deburring machine according to claim 2, **characterized in that** both the first discs (5) and the second discs (6) are capable of approaching the part (4) to be deburred.

4. Deburring machine according to claim 3, **characterized in that** the movement of approach of both the first discs (5) and the second discs (6) to the parts (4) to be deburred is perpendicular to the movement of the mobile carriage (2).

5. Deburring machine according to claim 3, **characterized in that** the second discs (6) are capable of moving vertically.
